# EUROPÄISCHE PATENTSCHRIFT

(11) **EP 0 769 158 B1**
(45) Veröffentlichungstag und Bekanntmachung des Hinweises auf die Patenterteilung: **02.10.2002**
(21) Anmeldenummer: 96909948.0
(22) Anmeldetag: 29.04.1996
(51) Int. Cl.: G02B 21/00

(54) **VORRICHTUNG ZUR OPTISCHEN ABTASTUNG VON OBJEKTEN AUF EINER ABTASTFLÄCHE SOWIE VERFAHREN ZU IHREM BETRIEB**
DEVICE FOR OPTICALLY SCANNING OBJECTS ON A SCANNING SURFACE AND PROCESS FOR OPERATING IT
DISPOSITIF POUR LE BALAYAGE OPTIQUE D'OBJETS SUR UNE SURFACE BALAYEE ET SON PROCEDE DE MISE EN ACTION

(30) Priorität: 02.05.1995 CH 124095
(43) Veröffentlichungstag der Anmeldung: 23.04.1997
(73) Patentinhaber: Bacsa, Wolfgang, 1110 Morges (CH)
(72) Erfinder: Bacsa, Wolfgang, 1110 Morges (CH)
(74) Vertreter: Wagner, Wolfgang, Dr. Phil., Dipl.-Phys.
(86) Internationale Anmeldenummer: CH9600165
(87) Internationale Veröffentlichungsnummer: WO96035136

(56) Entgegenhaltungen:
- US-A- 4 621 911
- APPLIED OPTICS, Bd. 31, Nr. 22, 1.August 1992, Seiten 4515-4518, XP000292096 NORIHIRO UMEDA ET AL: "SCANNING WIENER-FRINGE MICROSCOPE WITH AN OPTICAL FIBER TIP"

## Beschreibung

Die Erfindung betrifft eine Vorrichtung zum optischen Abtasten von Objekten auf einer Abtastfläche gemäss dem Oberbegriff des Anspruchs 1 sowie Verfahren zu ihrem. Betrieb.

Eine derartige Vorrichtung ist aus dem Artikel Norihiro Umeda et al: Scanning Wiener - fringe microscope with an optical fiber tip", Applied Optics, Bd 31, Nr. 22, 01.08.92, Seiten 4515 - 4518 bekannt.

Rasterung einer optischen Sonde mit einer Apertur kleiner als die Wellenlänge des Lichtes erlaubt es, die optische Auflösung zu erhöhen (D.W. Pohl, W. Denk, M. Lanz, Applied Physics Letters 44 (1984) 651). Bei einem solchen Verfahren ist die Auflösung durch die Grösse der Sondenapertur limitiert.

Die Rasterung von optischen Sonden in der Nähe eines Objektes lässt sich durch Benutzung eines Wechselwirkungsfeldes zwischen Objekt und Sonden verbessern. Zur Abstandsregelung der optischen Sonde ist ein gattungsgemässes Verfahren bekannt, bei welchem quergedämpfte optische Oberflächenwellen (R.C. Reddick, R.J. Warmack, T.L. Ferrell, Physical Review B 39 (1989) 767) benutzt werden. Es ist ein weiteres Verfahren bekannt, wo die Einwirkung der Scherkraft auf die Sonde durch Dämpfung der Modulationsfrequenz der Sonde benutzt wird (E. Betzig, P.L. Finn, J.S. Weiner, Applied Physcis Letter 60 (1992) 2484).

Mit solchen und anderen herkömmlichen Verfahren wurde die Sonde mehrheitlich zur Beleuchtung der Oberfläche benutzt. Eine Vergrösserung der Auflösung durch eine kleinere Sondenapertur hat dabei zur Folge, dass sowohl weniger Licht durch die Sonde transmittiert wird als auch die maximale Lichtintensität sich mit kleiner werdender Apertur reduziert und so die Auflösung begrenzt.

Es ist ein optisches Verfahren bekannt, bei welchem die Empfindlichkeit der Raman-Spektroskopie von Adsorbaten durch eine metallische Substratschicht und eine transparente Oberflächenschicht erhöht werden kann (W.S. Bacsa, J.S. Lannin, Applied Physics Letter 61 (1992) 19). Dadurch wird erreicht, dass ein Interferenzmaximum der stehenden Welle, erzeugt durch die Interferenz eines einfallenden und reflektierten Lichtstrahles, an die Oberfläche der transparenten Schicht zu liegen kommt. Somit ist die lokale Lichtintensität an der Oberfläche erhöht und verstärkt das Raman-Signal von Adsorbaten und ultradünnen Schichten.

Es ist auch ein Verfahren bekannt, wo stehende optische Wellen in der Nähe der Oberfläche dazu benutzt werden, eine optische Sonde parallel zur Oberfläche kontrolliert zu bewegen (N. Umeda et al., Applied Optics, 31 (1992) 4517).

Die Benutzung der Sonde als Lichtkollektor zur Lichtdetektion hat den Vorteil, dass, obwohl die Transmission des Lichtes ebenso durch die Grösse der Apertur limitiert ist, die maximale Intensität eines von aussen einfallenden Lichtstrahles nicht von der Sondenapertur beschränkt wird. Durch die kleine lokale Lichtintensität an opaken Oberflächen ist jedoch dieses Verfahren nicht spezifisch empfindlich auf Adsorbate und ultradünne Schichten.

Die Erfindung benutzt die Oberfläche einer planaren Mikrokavität als Abtastfläche. Die Mikrokavität lässt sich durch eine transparente Oberflächenschicht auf einer opaken Schicht realisieren. Obwohl die Reflektiviät an den Grenzflächen nicht sehr hoch ist, ist die Ueberlagerung der an den Grenzflächen reflektierten Wellen analog der einer Mikrokavität. Bei geeigneter Wahl der Schichtdicke der transparenten Schicht ist die stehende Welle sehr empfindlich auf Adsorbate und ultradünne Schichten. Die optimale Schichtdicke ist so gewählt, dass ein Interferenzmaximum an die Oberfläche zu liegen kommt und beträgt ca. ein ganzzahliges Vielfaches von L/4 (L: Wellenlänge der stehenden Welle), da die stehende Welle ein Minimum an der Grenzschicht zwischen der opaken und transparenten Schicht aufweist. Die exakte optimale Schichtdicke ist durch die Eindringtiefe des Lichtes in die opake Schicht und die optische Dichte der transparenten Schicht gegeben. Die Empfindlichkeit der stehenden Welle auf Adsorbate hängt auch von den optischen Eigenschaften der reflektierenden Substratschicht und transparenten Oberflächenschicht ab. Aufgrund der gewählten Schichtdicke der transparenten Oberflächenschicht interferiert das an der Oberfläche reflektierte und gestreute Lichte destruktiv mit dem an der opaken Schicht reflektierten Licht. Dadurch wird erreicht, dass das an der Oberfläche reflektierte und gestreute Licht einen maximalen Einfluss auf die stehende Welle hat.

Neben der Empfindlichkeit der stehenden Wellen auf einzelne Adsorbate ist gleichzeitig die lokale Lichtintensität erhöht und damit sind alle optischen Prozesse (Absorption, Lumineszenz, inelastische Lichtstreuung, nichtlineare optische Prozesse) verstärkt. Die spektrale Zerlegung des detektierten Lichtes kann zur spektroskopischen Untersuchung einzelner Adsorbate und lokalen chemischen und physikalischen Charakterisierung benutzt werden. Dabei ist zu beachten, dass inelastische inkoharente optische Prozesse nicht zur stehenden Welle beitragen. Zusätzlich kann die Polarisation des einfallenden und detektierten Lichtes überwacht werden und zur magnetischen Charakterisierung des Adsorbates eingesetzt werden.

Die Veränderung der stehenden Welle verursacht durch ein Adsorbat mit einer Ausdehnung kleiner als die Wellenlänge des verwendeten Lichtes, ist, durch die Beugung der Lichtwelle am Adsorbat, um ein vielfaches grösser. Dadurch wird es möglich Adsorbate optisch abzubilden, die kleiner sind als die Apertur der optischen Sonde.

Aus der gewählten Anordnung von Lichtstrahl und Substrat ergeben sich weitere Vorteile:

Die kohärente Ueberlagerung des einfallenden und reflektierten Lichtstrahles im Bereich der Ueberlappung der Lichtstrahlen ist ein Interferogramm und ein Hologramm der Oberfläche. Aufgrund der kleinen Objekt-Sonden-Distanz im Vergleich zur Wellenlänge unterscheidet sich diese holographische Abbildung von herkömmlichen holographischen Abbildungsverfahren. Die zwei- und dreidimensionale optische Abtastung in der Nähe der Abtastfläche ermöglicht die Abbildung von zwei- und dreidimensionalen Hologrammen. Aus dem Hologramm ist es dann möglich die Oberfläche zu rekonstruieren (Goodman, Joseph W. *Inkroduction to Fourier Optics*. McGraw-Hill, New York, 1968).

Um die Heranführung der optischen Sonde an die Oberfläche zu erleichtern, kann ein zweiter einfallender Lichtstrahl von gleicher Wellenlänge und verändertem Einfallswinkel oder ein Lichtstrahl mit verschiedener Wellenlänge verwendet werden. Die Phasenverschiebung der inkohärenten Uberlagerung der zwei stehenden Wellen mit zunehmendem Abstand vom Substrat kann als Distanzindikator zur Oberfläche für die optische Sonde eingesetzt werden.

Bis anhin wurden häufig Proben aufgrund der vergleichsweise höheren lokalen Lichtintensität an der Substratoberfläche auf einem transparenten Substrat und in Transmissionsanordnung untersucht. Erfindungsgemäss ist die lokale Intensität an der Oberfläche des nicht transparenten Substrates in Form einer Mikrokavität erheblich erhöht. Zusätzlich ist eine Reflexionsanordung einfacher zu realisieren und von Vorteil.

Die optische Sonde muss bei der Erfindung nicht moduliert werde und ist dadurch mit weniger Aufwand realisierbar.

Im folgenden wird die Erfindung anhand von Figuren, welche lediglich einen Ausführungsweg zeigen, näher erläutert.

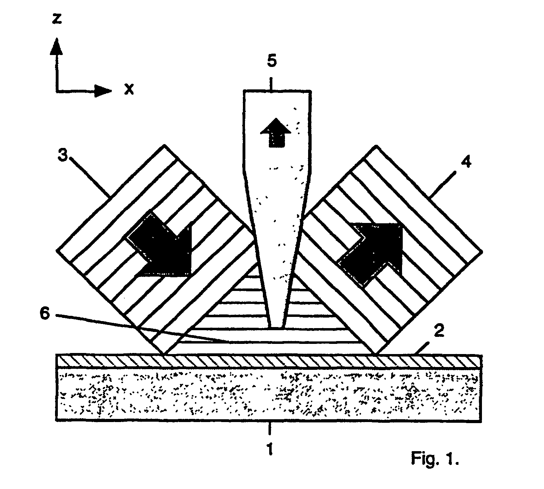

Figur 1 zeigt das Substrat, eine Mikrokavität, bestehend aus einer opaken Schicht 1 und einer transparenten Oberflächenschicht 2, einfallendem Lichtstrahl 3, reflektiertem Lichtstrahl 4 und optischer Sonde 5.

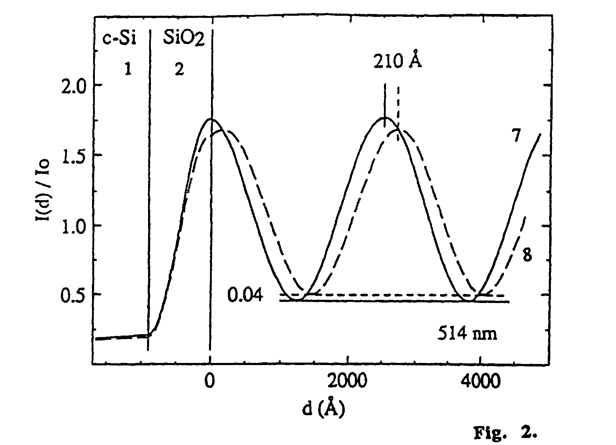

Figur 2 zeigt die berechnete Intensitätsfunktion 7 in Richtung senkrecht zur Oberfläche der stehenden Welle des Substrates und die ensprechende Funktion 8 mit einer Monolagen dicken Adsorbatschicht.

Figur 3 zeigt den Einfluss der optischen Sonde auf die stehende Welle mit Schattenregion 9 und Schattenregion 10 sowie Randzone der Sonde 11.

Figur 4a zeigt eine elliptische Apertur sowie Randregion 12. Figur 4b zeigt eine einseitig aufgebrachte absorbierende Schicht 13.

Als Substrat kann ein Silizium-Waver (1) und eine transparente Siliziumoxidschicht (2) benutzt werden. Als monochromatische Lichquelle kann ein Laser benutzt werden. Für einen monochromatischen Lichtstrahl der Wellenlänge 514nm eines Argon-Ionen-Lasers und einen Einfallswinkel von 57 Grad beträgt die optimale gewählte Schichticke der Siliziumoxidschicht 105nm. Die Lichtquelle muss hinreichend monochromatisch und kohärent sein, so dass sich eine stehende Welle in unmittelbarer Umgebung der Oberfläche ausbilden kann. Die stehende Welle ist durch den Bereich der Ueberlappung des einfallenden und reflektierten Lichtstrahles 6 räumlich begrenzt.

Als optische Sonde 5 kann ein zugespitzter Lichtleiter verwendet werden. Das im Lichtleiter sich ausbreitende Licht kann direkt einem optischen Spektrometer oder Lichtdetektor zugeführt werden. Die Polarisation des durch den optischen Sensor transmittierten Lichtes kann durch Einführung eines Polarisators in den Lichtweg des Lichtleiters überwacht werden. Die Polarisation des einfallenden Lichtstrahles kann durch einen Polarisator oder Ausrichtung der Polarisationsrichtung der Lichtquelle verändert werden.

Die Intensitätsverteilung in der Nähe der Oberfläche wurde anhand eines bekannten Matrixformalismus für Interferenz in Schichtsystemen (M. V. Klein, T. E. Furtak, 'Optics', John Wiley&Sons, Seite 295, 1986) berechnet. Als Adsorbatschicht wurde eine atomare Monolage (Schichtdicke: 0.4 nm) gewählt. Die Adsorbatschicht verschiebt die stehende Welle 8 um 21 Nanometer und verkleinert die Amplitude der Maxima und Minima der Intensiätsfunktion. Bei Adsorbaten kleiner als die Wellenlänge des Lichtes wird der einfallende Lichtstrahl gebeugt und verursacht eine Ausbreitung der Veränderung der stehenden Welle in lateraler Richtung. Mit zunehmenden Abstand vom Substrat vergossert sich die gestreute Wellenfront. Bei Adsorbaten wesentlich kleiner als die Wellenlänge der stehenden Welle verkleinert sich jedoch die Amplitude mit zunehmendem Abstand vom Adsorbat.

Adsorbate können von Unebenheiten des Substrates aufgrund der verschiedenen optischen Eigenschaften durch die Aenderung der lokalen Intensität der stehenden Welle in Funktion des senkrechten Abstands zum Substrat unterschieden werden, sofern Beugungseffekte an der zu untersuchenden Region klein sind.

Das detektierte Intensitätssignal der optischen Sonde kann in einem Regelkreis dazu verwendet werden, die optische Sonde kontrolliert über die Substratoberfläche zu führen. Dabei kann die Sonde bei konstantem Abstand zur Oberfläche (Phase) oder bei konstantem Intensitätssignal (Amplitude) über die Oberfläche geführt werden. Um die Phase konstant zu halten, muss an jedem Abtastpunkt die Aenderung der Amplitude in Abhängigkeit vom senkrechten Abstand zur Abtastfläche gemessen werden. Das kann durch Modulation der optischen Sonde senkrecht zum Substrat erreicht werden.

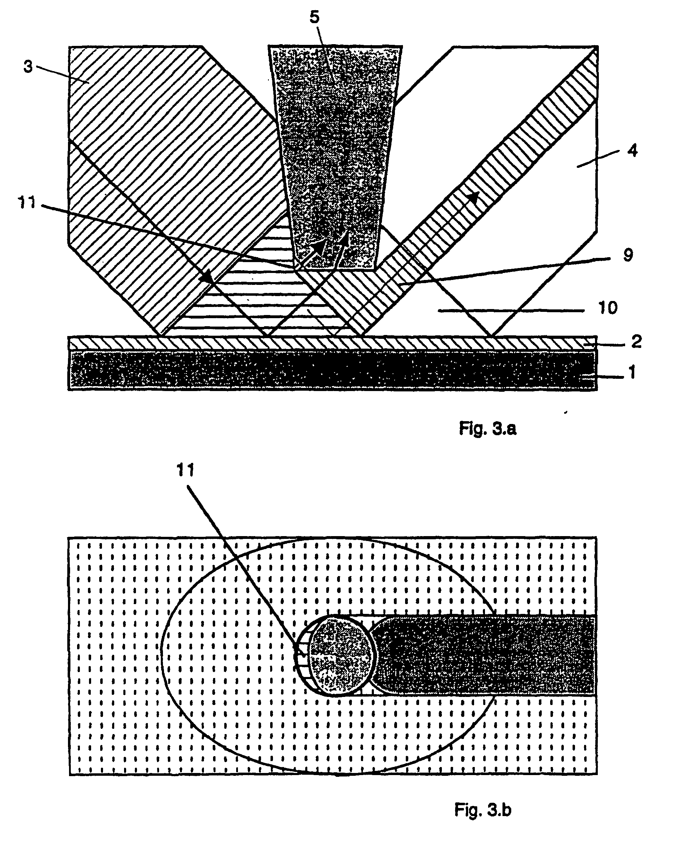

Figur 3 zeigt den Einfluss der optischen Sonde auf die stehende Welle. Die einseitige Beleuchtung der Sonde verursacht einen Lichtschatten. Die Region 9 ist durch das am Substrat reflektierte Licht erfüllt. Die Schattenregion 10 ist weder vom einfallenden noch vom reflektierten Licht erfüllt. Das Eindringen der stehenden Welle in die Randregion der Sonde erlaubt die Ausbreitung einer propagierenden Welle innerhalb der Sonde. Die laterale Auflösung ist so durch die Eindringtiefe der optischen Felder an der Randzone der Sonde 11 auf der Seite des einfallenden Lichtstrahles bestimmt und nicht direkt durch die Grosse der Sondenapertur. Der Einfluss der Lichtbeugung in der Bildung des Lichtschattens nimmt mit kleiner werdender Sondengrösse zu und hat zur Folge, dass der Schatten sich weniger ausbilden kann, wenn die Sondenspitze vergleichbar oder kleiner ist als die Wellenlänge des Lichtes.

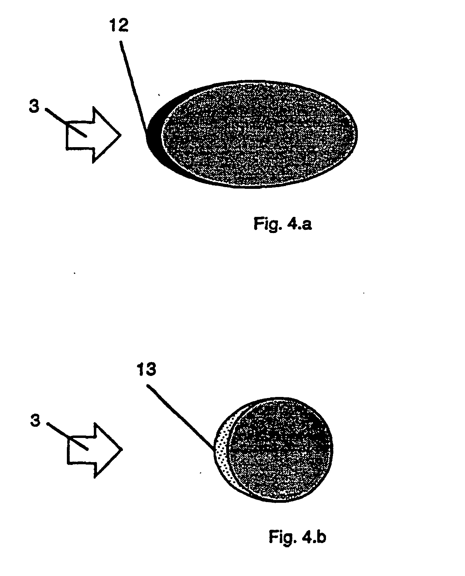

Die laterale Auflösung kann durch Reduzierung des an der Randzone der Sonde eindringenden Lichtes vergrössert werden. Das kann durch Verkleinerung der Apertur, Veränderung der Form der Apertur, Schrägstellung der optischen Sonde bezüglich der Oberfläche und einseitigen Beschichtung der optischen Sonde erreicht werden. Figur 4a zeigt eine elliptische Apertur, wodurch die mit dem Lichtfeld wechselwirkende Region 12 verkleinert werden kann. Figur 4b zeigt, wie durch eine einseitig aufgebrachte absorbierende Schicht 13 das in die Sonde eindringende Licht reduziert werden kann. Die einseitige Schicht auf der Sondenspitze hat den Vorteil, dass die transmittierte Lichtmenge durch Aenderung der Orientierung bezüglich des einfallenden Lichtstrahles eingestellt werden kann und sich die Möglichkeit ergibt, mit einer einzigen Sonde die laterale Auflösung kontinuierlich zu verändern.

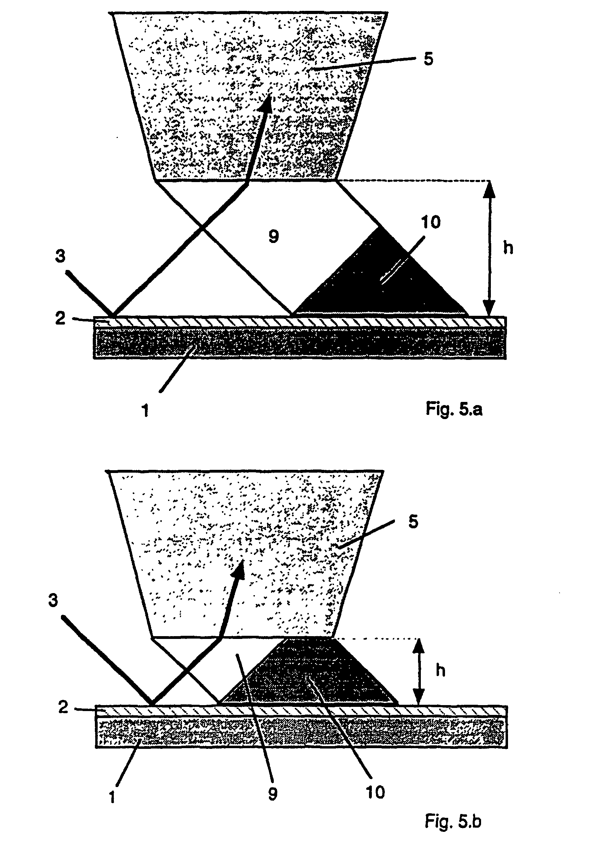

Das reflektierte Licht in Region 9 in Figur 3 kann sich in der optischen Sonde ausbreiten und verursacht ein konstantes Untergrundsignal. Figur 5 zeigt, wie sich Region 9 mit kleiner werdendem Abstand zum Substrat verändert. In der unmittelbaren Nähe des Substrates verkleinert sich aufgrund des Eintauchens der Sonde in die Region 10 der Anteil des reflektierten Lichtes, das sich in der Sonde ausbreitet. Die Verkleinerung des konstanten Untergrundsignales kann als Indikator der unmittelbaren Nähe des Substrates verwendet werden.

## Patentansprüche

1. Vorrichtung zur optischen Abtastung von Objekten auf einer Abtastfläche, mit einem Substrat, dessen Oberfläche die Abtastfläche bildet, einer Lichtquelle zur Erzeugung eines auf die Abtastfläche einfallenden monochromatischen kohärenten Lichtstrahls (3) und einer gegenüber der Abtastfläche verschiebbaren optischen Sonde (5) mit gegen die Abtastfläche gerichteter Apertur zur Ueberwachung einer durch Ueberlagerung des einfallenden mit einem reflektierten Lichtstrahl gebildeten ersten monochromatischen stehenden Welle (6), **dadurch gekennzeichnet, dass** die Abtastfläche durch die Oberfläche einer für den einfallenden Lichtstrahl transparenten Schicht (2) des Substrats gebildet wird, welche auf einer opaken Schicht (1) desselben angeordnet ist.

2. Vorrichtung nach Anspruch 1, **dadurch gekennzeichnet, dass** die Dicke der transparenten Schicht (2) derart gewählt ist, dass die Intensität der ersten stehenden Welle (6) an der Abtastfläche kein lokales Minimum aufweist.

3. Vorrichtung nach Anspruch 2, **dadurch gekennzeichnet, dass** die Dicke der transparenten Schicht (2) derart gewählt ist, dass die Intensität der ersten stehenden Welle(6)an der Abtastfläche ein lokales Maximum aufweist.

4. Vorrichtung nach einem der Anspüche 1 bis 3, **dadurch gekennzeichnet, dass** die Sonde im Bereich der Apertur mindestens einseitig seitlich mit einem opaken Material beschichtet ist.

5. Vorrichtung nach einem der Ansprüche 1 bis 4, **dadurch gekennzeichnet, dass** die Projektion der Apertur auf die Abtastfläche längliche, insbesondere elliptische Form aufweist.

6. Vorrichtung nach einem der Ansprüche 1 bis 5, **dadurch gekennzeichnet, dass** die Abmessung der Apertur grösser ist als die Wellenlänge des einfallenden Lichtstrahls.

7. Verfahren zum Betrieb einer Vorrichtung nach einem der Ansprüche 1 bis 6, **dadurch gekennzeichnet, dass** bei der Abtastung der Abstand der Sonde von der Abtastfläche derart gesteuert wird, **dass** die Intensität der stehenden Welle (6,7) im Bereich der Apertur konstant gehalten wird.

8. Verfahren zum Betrieb einer Vorrichtung nach einem der Ansprüche 1 bis 6, **dadurch gekennzeichnet, dass** bei der Abtastung der Abstand der Sonde von der Abtastfläche derart gesteuert wird, **dass** die Phase der stehenden Welle (6) im Bereich der Apertur konstant gehalten wird.

9. Verfahren zum Betrieb einer Vorrichtung nach einem der Ansprüche 1 bis 6, **dadurch gekennzeichnete, dass** zur Bestimmung des Abstandes der Sonde von der Abtastfläche ein durch teilweises Eindringen des reflektierten Lichtstrahls (9) in die Apertur verursachtes Untergrundsignal überwacht wird.

10. Verfahren zum Betrieb einer Vorrichtung nach einem der Ansprüche 1 bis 6, **dadurch gekennzeichnet, dass** bei der Annäherung der Sonde (5) an die Abtastfläche zur Bestimmung des Abstandes zwischen denselben eine weitere monochromatische stehende Welle von unterschiedlicher Wellenlänge erzeugt und die Phasenverschiebung zwischen der ersten stehenden Welle und der weiteren stehenden Welle überwacht wird.

11. Verfahren zum Betrieb einer Vorrichtung nach einem der Ansprüche 1 bis 6, **dadurch gekennzeichnet, dass** das von der Sonde aufgenommene Licht spektral zerlegt wird.

12. Verfahren zum Betrieb einer Vorrichtung nach einem der Ansprüche 1 bis 6, **dadurch gekennzeichnet, dass** die Polarisation des von der Sonde aufgenommenen Lichts überwacht wird.

## Claims

1. A device for the optical scanning of objects on a scanning surface, comprising a substrate whose surface forms the scanning surface, a light source producing a monochromatic coherent light beam (3) incident on the scanning surface, and an optical probe (5) displaceable with respect to the scanning surface and having an aperture oriented towards the scanning surface for monitoring a monochromatic standing wave (6) formed by the superposition of the incident beam and a reflected beam **characterized in that** the scanning surface is the surface of a layer (2) transparent for the incident light beam and placed on an opaque layer (1).

2. Device according to claim 1, **characterized in that** the thickness of the transparent layer (2) is selected such that the intensity of the first standing wave (6) does not have a local minimum at the scanning surface.

3. Device according to claim 2, **characterized in that** the thickness of the transparent layer (2) is selected such that the intensity of the first standing wave (6) does have a local maximum at the scanning surface.

4. Device according to one of claims 1 to 3, **characterized in that** the optical probe is at least on one side laterally coated with an opaque material.

5. Device according to one of claims 1 to 4, **characterized in that** the projection of the aperture on the scanning surface is of oblong, in particular of elliptic shape.

6. Device of claims 1 to 5, **characterized in that** the size of the aperture is larger than the wavelength of the incident light beam.

7. Process for operating a device according to one of claims 1 to 6, **characterized in that** during the scanning process the distance of the probe from the scanning surface is controlled such **that** the intensity of the standing wave (6, 7) at the aperture is kept constant.

8. Process for operating a device according to one of claims 1 to 6, **characterized in that** during the scanning process the distance of the probe from the scanning surface is controlled such **that** the phase of the standing wave (6) at the aperture is kept constant.

9. Process for operating a device according to one of claims 1 to 6, **characterized in that** for determining the distance of the probe from the scanning surface, a background signal caused by partial penetration into the aperture of the reflected light beam (9) is monitored.

10. Process for operating a device according to one of claims 1 to 6, **characterized in that** during the approach of the probe (5) to the scanning surface for determining the distance between them a further monochromatic standing wave of different wavelength is produced and the phase shift between the first standing wave and the further standing wave monitored.

11. Process for operating a device according to one of claims 1 to 6, **characterized in that** the light collected by the probe is spectroscopically analysed.

12. Process for operating a device according to one of claims 1 to 6, **characterized in that** the polarization of the light collected by the probe is monitored.

## Revendications

1. Dispositif pour obtenir une image des objets sur une surface, ledit substrat formant une surface, une source de lumière pour créer un faisceau de lumière monochromatique et cohérent (3) et en face une sonde optique (5) déplaçable, avec une ouverture orientée vers la surface pour surveiller une onde stationnaire et monochromatique (6), laquelle est formée par la superposition d'un faisceau incident et réfléchi, **caractérisé en ce que** la surface est la surface d'une couche transparente (2) pour le faisceau incident qui est situé sur un substrat opaque (1).

2. Dispositif selon la revendication 1, **caractérisé en ce que** l'épaisseur de la couche transparente (2) est choisi de telle façon que l'intensité de la première onde stationnaire (6) ne contienne pas un minimum local sur la surface.

3. Dispositif selon la revendication 2, **caractérisé en ce que** l'épaisseur de la couche transparente (2) est choisi de telle façon que l'intensité de la première onde stationnaire (6) contienne un maximum local sur la surface.

4. Dispositif selon la revendication 1 à 3, **caractérisé en ce que** la sonde de la région de l'ouverture est au moins couverte sur un côté avec un milieu opaque (13).

5. Dispositif selon la revendication 1 à 4, **caractérisé en ce que** la projection de l'aperture sur la surface a une forme oblongue et en particulier une forme elliptique.

6. Dispositif selon la revendication 1 à 5, **caractérisé en ce que** la taille de l'ouverture est plus grande que la longueur d'onde du faisceau de la lumière incidente.

7. Procédé de fonctionnement d'un dispositif d'après l'une des revendications 1 à 6, **caractérisé en ce que** pendant l'acquisition la distance de la sonde à la surface est contrôlée de telle façon **que** l'intensité de l'onde stationnaire (6,7) est tenue constante dans la région de l'aperture.

8. Procédé de fonctionnement d'un dispositif d'après l'une des revendications 1 à 6, **caractérisé en ce que** pendant l'acquisition la distance de la sonde à la surface est contrôlée de telle façon **que** la phase de l'onde stationnaire (6) est tenu constante dans la région de l'ouverture

9. Procédé de fonctionnement d'un dispositif d'après l'une des revendications 1 à 6, **caractérisé en ce que** pour la détermination de la distance de la sonde à la surface, le signal de fond causé par la pénétration partielle de la lumière réfléchie (9) dans l'ouverture est exploité.

10. Procédé de fonctionnement d'un dispositif d'après l'une des revendications 1 à 6, **caractérisé en ce que pour** l'approche de la sonde (5) de la surface, une autre onde stationnaire et monochromatique avec une longueur d'onde différente est utilisée et le déphasage entre la première et la deuxième onde stationnaire est utilisé pour déterminer la distance entre sonde et surface.

11. Procédé de fonctionnement d'un dispositif d'après l'une des revendications 1 à 6, **caractérisé en ce que** la lumière collectée par la sonde est analysée spectroscopiquement.

12. Procédé de fonctionnement d'un dispositif d'après l'une des revendications 1 à 6, **caractérisé en ce que** la polarisation de la lumière collectée par la sonde est mesurée.
